# EUROPÄISCHE PATENTSCHRIFT

(11) **EP 2 802 627 B1**
(45) Veröffentlichungstag und Bekanntmachung des Hinweises auf die Patenterteilung: **23.05.2018**
(21) Anmeldenummer: 12812934.3
(22) Anmeldetag: 18.12.2012
(51) Int. Cl.: C09C 1/30, C09C 1/36, C09C 3/12, C08K 9/06

(54) **PARTIKULÄRER FESTSTOFF, VERFAHREN ZU DESSEN HERSTELLUNG, VERWENDUNG ALS FÜLLSTOFF UND ZUGEHÖRIGER ARTIKEL**
PARTICULATE SOLID, PROCESS FOR THE PRODUCTION THEREOF, USE AS FILLER AND ASSOCIATED ARTICLES
MATIÈRE SOLIDE PARTICULAIRE, PROCÉDÉ DE PRÉPARATION DE CETTE MATIÈRE SOLIDE, SON UTILISATION EN TANT QUE CHARGE, ET ARTICLE ASSOCIÉ

(30) Priorität: 09.01.2012 DE 102012100123
(43) Veröffentlichungstag der Anmeldung: 19.11.2014
(73) Patentinhaber: Evonik Degussa GmbH, 45128 Essen (DE)
(72) Erfinder: WITTE, Stephen, 30519 Hannover (DE); HERRMANN, Wolfram, 31515 Wunstorf (DE)
(86) Internationale Anmeldenummer: PCT/EP2012/075927
(87) Internationale Veröffentlichungsnummer: WO 2013/104497

(56) Entgegenhaltungen:
- EP-A1- 2 184 325
- US-A- 3 833 633
- US-A- 4 216 024

## Beschreibung

Die Erfindung bezieht sich auf das Arbeitsgebiet moderner Hybrid-Werkstoffe aus organischen und anorganischen Materialien, nämlich insbesondere mit anorganischen oxidischen Füllstoffen gefüllte Polymere. Wichtige Anwendungsgebiete für elastomere Polymere dieser Art sind Reifen, Antriebsriemen, Luftfederungen, Förderbänder, Schläuche und andere mehr.

Neben der Wahl des Polymers sind Füllstoffe in Elastomeren und anderen Polymeren für den fertigen Werkstoff eigenschaftsbestimmend. Die am häufigsten verwendeten Füllstoffe in der Elastomertechnik sind Ruße und Kieselsäuren. Während Ruße in der Regel mit Polymeren sehr gut kompatibel sind, ist diese Eigenschaft bei Kieselsäuren und anderen entsprechend verwendeten Metall- und Halbmetalloxiden durch ihre polare, hydrophile Oberfläche nicht gegeben. Neben den Füllstoffen dienen weitere Additive der Eigenschaftsverbesserung. Das Interesse an Rohstoffen zur Herstellung leistungsfähigerer Werkstoffe ist sehr hoch.

Zu den auf dem Arbeitsgebiet verwendeten Additiven gehören u.a. Peroxide. Diese werden als Radikalstarter und Vernetzer eingesetzt. Polymerisierte plastische Vorprodukte, die zunächst noch geformt werden können, werden nach dem Formen unter Wärmeeinwirkung vernetzt bzw. gehärtet. Das hierfür eingesetzte Peroxid wird in relativ geringer Konzentration benötigt und sollte in der ungehärteten Mischung möglichst gut verteilt sein. Ebenso sind weitere Additive und der Füllstoff in der Mischung zu verteilen. Es scheint daher ein interessantes Ziel zu sein, ein Peroxid auf dem Füllstoff zu fixieren.

Aus der WO 2005/061631 sind Verfahren bekannt, um Nucleophile auf der Oberfläche von Partikeln aus oxidischen Verbindungen von Metallen und/oder Halbmetallen M auf deren Oberfläche anzubinden. Dies geschieht mit hoher Effizienz über den Einsatz von Siliciumhalogeniden SiX₄. An der Oberfläche werden ausgehend von M-O-H-Gruppen M-O-Si-X-Gruppen ausgebildet, deren Halogen nucleophil substituierbar ist. Die Einführung von Peroxidgruppen via Hydroperoxyverbindungen auf diese Weise ist jedoch ungeeignet, da sich die Anbindung als hydrolyseinstabil erweist. Bei Einsatz solcher Füllstoffe in Elastomeren kommt es zur frühzeitigen Abspaltung von Hydroperoxid in den Grundmischungen, was zu stark unerwünschten Alterungserscheinungen führt.

Aus der DE 2,247,885 sind Organosilicium-Verbindungen mit Peroxidgruppen im Molekül bekannt, die als Haftvermittler zur Verbesserung der Bindung von ungesättigten organischen Harzen, insbesondere Polyesterharzen, an organische Substrate vorteilhaft sind. Die Organosilicium-Verbindungen haben die allgemeine Struktur

RₘX₃₋ₘSiR'OOR",

worin R Alkyl oder Phenyl, X ein Alkoxid, o.a. und R' und R" weitere organische Reste bedeuten. Die als solches bekannte in-situ Silanisierung eines Füllstoffs mit diesem Haftverbesserungsmittel scheitert jedoch daran, dass die für die Silanisierungsreaktion im Mischer benötigten Temperaturen das Peroxid frühzeitig zersetzen.

Ferner sind aus US 4216024 oberflächenmodifizierte Füllstoffe für Polymerkompositionen, wobei der Oberflächenmodifikator über eine funktionelle Peroxidgruppe verfügt, bekannt. In einem ersten Schritt werden die Partikel mit einem Organoalkoxysilan mit Vinyl-, Allyl oder Norbonyl-Gruppen modifiziert und anschließend mit Ozon oxidiert.

Aus EP 2184325 sind thermoplastische Harzzusammensetzungen aus Metalloxidpartikeln, dessen Oberflächen mit einem Peroxid modifiziert sind, und einem thermoplastischen Harz bekannt. Die organischen Peroxide werden durch die Reaktion zwischen der Aminogruppe eines Aminosilans, welches mit der Partikeloberfläche kondensiert ist, und einer organischen Peroxidkomponente, die über eine ungesättigte Kohlenstoffverbindung verfügt, an die Partikeloberfläche angekoppelt.

Die Aufgabe der Erfindung besteht daher darin, einen anorganisch-oxidischen Füllstoff für Polymere und insbesondere Elastomere anzugeben, bei dem Peroxidfünktionalitäten auf der Füllstoffoberfläche fest verankert sind, sowie ein Verfahren zu dessen Herstellung.

Die Erfindung betrifft einen partikulären Feststoff aus Kieselsäure, welcher dadurch gekennzeichnet ist, dass er Peroxyorganosiloxangruppen aufweist und die Peroxyorganosiloxangruppen folgende Struktur II besitzen: 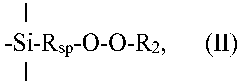
wobei Rₛₚ eine lineare oder verzweigte Spacergruppe mit aliphatischer, arylischer oder gemischt aliphatisch/arylischer Struktur ist,
und R₂ eine verzweigte oder unverzweigte, gesättigte oder ungesättigte, substituierte oder unsubstituierte, aliphatische, aromatische oder gemischt aliphatische/aromatische einbindige Kohlenwasserstoffgruppe, bevorzugt Methyl (-CH₃), Ethyl (-CH₂-CH₃), n-Propyl (-(CH₂)₂-CH₃), Isopropyl(-CH(CH₃)-CH₃), n-Butyl (-(CH₂)₃-CH₃), Isobutyl (-CH₂-CH(CH₃)-CH₃), t.-Butyl (-C(CH₃)₃), 1,1-Dimethylbenzyl (-CH₂-C(CH₃)₂-C₆H₅), 1-Methylbenzyl (-CH₂-CH(CH₃)-C₆H₅), Benzyl (-CH₂-C₆H₅), Acetyl (-CO-CH₃), Propanoyl (-CO-CH₂-CH₃), Benzoyl (-CO-C₆H₅), m-Chlorbenzoyl (-CO-C₆H₄Cl) und p-Chlorbenzoyl (-CO-C₆H₄Cl) ist, besonders bevorzugt sind Methyl (-CH3), t.-Butyl (-C(CH₃)₃), 1,1-Dimethylbenzyl (-CH₂-C(CH₃)₂-C₆H₅), Acetyl (-CO-CH₃) und Benzoyl (-CO-C₆H₅).

Ein erfindungsgemäßer partikulärer Feststoff dieser Gattung zeichnet sich durch oberflächengebundene Peroxyorganosiloxangruppen aus, die kovalent auf der Si-O-Oberfläche gebunden sind und durch die besonderen Verfahren nach dieser Erfindung erstmals bereitgestellt werden konnten.

Unter "anorganisch-oxidischen Verbindungen" werden hier allgemein die Kieselsäuren verstanden. Besondere Bedeutung haben dabei gefällte und pyrogene Kieselsäuren.

Unter "Funktionalisierung" wird hier eine in erster Linie an der Oberfläche eines Feststoffpartikels stattfindende chemische oder physicochemische Modifizierung der Partikeloberfläche verstanden. Mit der Funktionalisierung wird angestrebt, die als Füllstoff oder als Compositmaterial in Hybridwerkstoffen eingesetzten Partikel hinsichtlich ihrer Anwendung an den jeweiligen Verwendungszweck anzupassen und dabei mit besonderen Eigenschaften zu versehen. Hierfür werden funktionelle Gruppen an der Oberfläche eingeführt, d.h. bestimmte chemische Gruppen der Basispartikel werden substituiert, so dass kovalent gebundene Gruppen, über die der Basispartikel nicht verfügt, auf der Oberfläche verankert werden. Dem steht nicht entgegen, dass poröse Feststoffe teilweise im Inneren bzw. tieferliegenden Oberflächenbereichen funktionalisiert sein können oder dass feindisperse Füllstoffe funktionalisiert und anschließend aggregiert werden können, so dass sich dort ebenfalls funktionelle Gruppen zusätzlich im Inneren der Partikel befinden.

Die Basispartikel können auch als sogenannte Core-Shell-Partikel ausgebildet sein. Dabei ist ein Kern aus beliebigem Material von einer festen Hülle bzw. einer vollständig deckenden Oberflächenschicht aus Kieselsäure bedeckt.

Unter einer "Silanisierung" wird im Folgenden eine Funktionalisierung mit Organosilanen verstanden. Die Organosilane besitzen dabei die allgemeine Struktur I

Y₍₄₋ₙ₎SiR₁ₙ, mit n gleich 1 bis 3. (I)

Dabei stellt R₁ den organischen Rest dar, der auf der Oberfläche des anorganisch-oxidischen Feststoffpartikels verankert werden soll, und Y₍₄₋ₙ₎ stellt mindestens eine hydrolysierbare Abgangsgruppe dar, die unter Ausbildung kovalenter Bindungen mit den OH-Gruppen der Feststoffoberfläche reagiert. Dabei ist Y unabhängig voneinander ein verzweigtes oder unverzweigtes Alkyl, bevorzugt C₁ bis C₁₈, besonders bevorzugt Methyl (-CH₃), Ethyl (-CH₂-CH₃), Isopropyl (-CH(CH₃)-CH₃), Propyl (-(CH₂)₂-CH₃) oder C₄ bis C₁₈ Alkyl,
ein verzweigtes oder unverzweigtes Alkoxy, bevorzugt verzweigte oder unverzweigte C₁ bis C₂₂ Alkoxy, besonders bevorzugt Methoxy (-O-CH₃), Ethoxy (-O-CH₂-CH₃), Isopropoxy (-O-CH(CH₃)-CH₃), Propoxy (-O-(CH₂)₂-CH₃), Butoxy (-O-(CH₂)₃-CH₃), Pentoxy (-O-(CH₂)₄-CH₃), Hexoxy (-O-(CH₂)₅-CH₃) oder C₇ bis C₂₂ Alkoxy,
ein verzweigtes oder unverzweigtes C₂ bis C₂₅ Alkenyloxy, vorzugsweise C₄ bis C₂₀ Alkenyloxy,
ein C₆ bis C₃₅ Aryloxy, vorzugsweise C₉ bis C₃₀ Aryloxy, besonders bevorzugt Phenyloxy (-O-C₆H₅),
eine verzweigte oder unverzweigte C₇ bis C₃₅ Alkylaryloxygruppe, bevorzugt Benzyloxy (-O-CH₂-C₆H₅) oder 2-Phenylethoxy (-O-(CH₂)₂-C₆H₅),
eine verzweigte oder unverzweigte C₇ bis C₃₅ Arylalkyloxygruppe, bevorzugt Tolyloxy (-O-C₆H₄-CH₃),
ein Halogenid, vorzugsweise Chlorid oder Bromid, besonders bevorzugt Chlorid,
eine Alkoxyalkoxygruppe der allgemeinen Formel -O-R'-O-R", wobei R' und R" unabhängig voneinander eine verzweigte oder unverzweigte, gesättigte oder ungesättigte, substituierte oder unsubstituierte , aliphatische, aromatische oder gemischt aliphatische/aromatische Kohlenwasserstoffgruppe, vorzugsweise Methyl (-CH₃) bzw. Methylen (-CH₂-), Ethyl (-CH₂-CH₃) bzw. Ethylen (-CH₂-CH₂-), Propyl (-(CH₂)₂-CH₃) bzw. Propylen (-(CH₂)₃-) sein können,
ein Amin der allgemeinen Formel -NR₂, wobei R unabhängig voneinander H, eine verzweigte oder unverzweigte, gesättigte oder ungesättigte, substituierte oder unsubstituierte , aliphatische, aromatische oder gemischt aliphatische/aromatische Kohlenwasserstoffgruppe, vorzugsweise eine aliphatische Alkylgruppe mit C₁ bis C₆, besonders bevorzugt Methyl (-CH₃), Ethyl (-CH₂-CH₃), Propyl (-(CH₂)₂-CH₃), Isopropyl (-CH(CH₃)-CH₃) oder Butyl (-(CH₂)₃-CH₃) sind,
ein Oxycarbonyl der allgemeinen Formel -O-CO-R, wobei R H, eine verzweigte oder unverzweigte, gesättigte oder ungesättigte, substituierte oder unsubstituierte , aliphatische, aromatische oder gemischt aliphatische/aromatische Kohlenwasserstoffgruppe, vorzugsweise eine aliphatische Alkylgruppe mit C₁ bis C₆, besonders bevorzugt Methyl (-CH₃), Ethyl (-CH₂-CH₃), Propyl (-(CH₂)₂-CH₃), Isopropyl (-CH(CH₃)-CH₃) oder Butyl (-(CH₂)₃-CH₃) ist.
Äußerst bevorzugt sind hiervon Methoxy (-O-CH₃), Ethoxy (-O-CH₂-CH₃), Isopropoxy (-O-CH(CH₃)-CH₃) und Propoxy (-O-(CH₂)₂-CH₃).
Silanisierungen sind als solches in der Literatur gut beschrieben und brauchen daher hier nicht näher erläutert zu werden.

Die Bildung der Siloxanverbindungen erfolgt mechanistisch in zwei Schritten, der Primär- und der Sekundärreaktion. Bei der Primärreaktion erfolgt die Reaktion des organofunktionellen Silans mit den Silanolgruppen des Feststoffs, der Kieselsäure, wobei die hydrolysierbaren Gruppen des Silans abgespalten werden. In der Sekundärreaktion findet eine Quervernetzung der auf der Oberfläche immobilisierten

Silanmoleküle statt. Die Sekundärreaktion erfolgt langsamer als die Primärreaktion. Durch saure oder basische pH-Werte lassen sich beide Reaktionen beschleunigen. Ebenso führt eine erhöhte Wasserkonzentration im organischen Lösungsmittel zu einer Beschleunigung der Reaktion.

Der Füllstoff kann nach drei verschiedenen Methoden mit dem organofunktionellen Silan zur Reaktion gebracht werden:
- in-situ-Verfahren: Das organofunktionelle Silan wird der Kautschukmischung bzw. dem mit Füllstoff zu versehenden Polymer in einem Mischer während der Dispersionsphase des Füllstoffs zugesetzt (bevorzugte Reaktionstemperatur: 140 bis 160 °C)
- Nassverfahren: zu einer wässrigen Füllstoffsuspension wird das Silan gegeben und anschließend bei erhöhter Temperatur zur Reaktion gebracht (bevorzugte Reaktionstemperatur: 80 °C)
- Trockenverfahren: in einem Mischer werden Füllstoff und Silan miteinander vermischt und anschließend bei erhöhter Temperatur zur Reaktion gebracht (bevorzugte Reaktionstemperatur: 120 °C)

Aus den Bedingungen ergibt sich, dass die Einführung von Peroxygruppen nicht über eine in-situ Silanisierung, wie in der Elastomertechnik üblich, mit Peroxysilanen erfolgen kann. Die Lösung der Aufgabe umfasst daher weiterhin besondere Verfahren, die nachfolgend näher dargestellt sind.

Durch die Verfahren werden allgemein als Füllstoff geeignete partikuläre anorgischoxidische Feststoffe erhalten, die bevorzugt Peroxyorganosiloxangruppen mit folgender Struktur II besitzen: 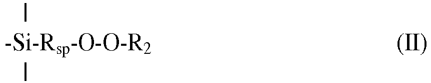 wobei Rₛₚ eine Spacergruppe mit aliphatischer, arylischer oder gemischt aliphatischer/arylischer Struktur ist. Sie dient lediglich als Platzhalter zwischen Füllstoffpartikel und Peroxidfunktionalität. Eine exakte Definition und Beispiele für Spacergruppen werden bei der Beschreibung der verschiedenen Synthesevarianten geliefert.

R₂ ist eine verzweigte oder unverzweigte, gesättigte oder ungesättigte, substituierte oder unsubstituierte, aliphatische, aromatische oder gemischt aliphatische/aromatische einbindige Kohlenwasserstoffgruppe, bevorzugt Methyl (-CH₃), Ethyl (-CH₂-CH₃), n-Propyl (-(CH₂)₂-CH₃), Isopropyl(-CH(CH₃)-CH₃), n-Butyl (-(CH₂)₃-CH₃), Isobutyl (-CH₂-CH(CH₃)-CH₃), t.-Butyl (-C(CH₃)₃), 1,1-Dimethylbenzyl (-CH₂-C(CH₃)₂-C₆H₅), 1-Methylbenzyl (-CH₂-CH(CH₃)-C₆H₅), Benzyl (-CH₂-C₆H₅), Acetyl (-CO-CH₃), Propanoyl (-CO-CH₂-CH₃), Benzoyl (-CO-C₆H₅), m-Chlorbenzoyl (-CO-C₆H₄Cl) und p-Chlorbenzoyl (-CO-C₆H₄Cl). Besonders bevorzugt sind Methyl (-CH₃), t.-Butyl (-C(CH₃)₃), 1,1-Dimethylbenzyl (-CH₂-C(CH₃)₂-C₆H₅), Acetyl (-CO-CH₃) und Benzoyl (-CO-C₆H₅).

Der modifizierte partikuläre Feststoff enthält die Peroxyorganosiloxangruppen kovalent auf seiner Oberfläche gebunden.

Tests haben ergeben, dass eine echte kovalente Anbindung unter Erhalt der Peroxidfunktionalität vorliegt. Die aufgepropften Peroxidgruppen sind bei 100 °C über eine gewisse Zeit stabil. Erst bei Temperaturen von 160 bis 180 °C setzt eine Zersetzung ein. Die Peroxidfunktion ist in der gewünschten Weise wie ein Peroxidadditiv aktiv. Die gewünschte Wirkung innerhalb des Polymer-Füllstoff-Gemisches ist gegeben, und es findet durch die radikalische Spaltung des Peroxids vom Füllstoff zusätzlich eine direkte kovalente Anbindung zwischen Füllstoff und Polymer statt. Dies äußert sich in höheren Zugfestigkeiten, höheren Spannungswerten, höheren Abriebwiderständen, niedrigeren Druckverformungsresten und bei Reifenanwendungen einem niedrigeren Rollwiderstand.

Durch die geringere innere Reibung kommt es außerdem zu einer geringeren Wärmeentwicklung im Werkstoff. Die genannten positiven Effekte treten im Vergleich zu in gleicher Menge eingemischten unmodifizierten Füllstoffen auf.

Als Zersetzungstemperaturen werden für die beschriebenen Partikel Temperaturen zwischen 100 °C und 220 °C angestrebt. Besonders bevorzugt sind hierbei Zersetzungstemperaturen zwischen 160 °C und 180 °C.

Bei den im Folgenden beschriebenen Synthesevarianten der Erfindung wird zunächst die Füllstoffoberfläche silanisiert und erst anschließend die gewünschte Peroxidfunktionalität eingeführt. Da die Silanisierung nicht in situ im Mischer durchgeführt wird, kann außerdem von einem homogeneren Produkt ausgegangen werden. Die erhaltenen mit Peroxidfunktionalitäten ausgestatteten silanisierten Füllstoffe sind in der Lage, kovalente Bindungen zum Polymer auszubilden. Hierbei sind die beschriebenen Füllstoffe nicht auf Mehrfachbindungen oder andere funktionelle Gruppen des Polymers angewiesen. Sie sind grundsätzlich dazu in der Lage, mit jedem peroxidisch vernetzbarem Polymer kovalent Bindungen auszubilden. Ein weiterer Vorteil ist, dass die aufgepropften Peroxidgruppen durch eine lokale Übervernetzung am Füllstoffpartikel einen langsameren Modulanstieg zwischen Polymer und Füllstoff verursachen. Dies hat einen positiven Einfluss auf die physikalischen und dynamischen Eigenschaften des fertigen Werkstoffs. Des Weiteren sind die beschriebenen Füllstoffe gut lagerbar, hydrolyseunempfindlich und bei den üblichen Mischtemperaturen stabil.

Gemäß einem ersten Aspekt der Erfindung wird der als Füllstoff geeignete partikuläre anorganisch-oxidische Feststoff nach der Erfindung mit einem Verfahren hergestellt, bei dem der Füllstoff mit einem Organosilan, das eine nucleophil substituierbare Abgangsgruppe enthält, silanisiert wird, wobei die Abgangsgruppe in einem Folgeschritt durch eine Hydroperoxyverbindung, mit Hilfe einer Base und weiter vorzugsweise mit Hilfe eines Phasentransferkatalysators, substituiert wird.

Als organofunktionelle Silane sind für dieses Verfahren solche, die neben den zur Anbindung an den Füllstoff erforderlichen hydrolysierbaren Gruppen (Siloxanbildung) einen aliphatischen Rest mit einer möglichst endständigen, nucleophil substituierbaren Abgangsgruppe besitzen, erforderlich.

Die Verfahrensschritte für dieses Verfahren gemäß Variante 1 sind demnach:
- Silanisieren des partikulären Feststoffs mit einem Organosilan, das je Molekül wenigstens eine nucleophil substituierbare Abgangsgruppe enthält, oder Vorlegen eines in dieser Weise silanisierten Feststoffs,
- Umsetzen des Feststoffs während der Silanisierung in einer Eintopfreaktion oder Umsetzen des Silanisierungsprodukts (basenkatalysiert) mit einer Hydroperoxyverbindung.

Selbstverständlich ist es zum Silanisieren eines Grundfüllstoffs gleichwertig, einen bereits silanisierten Füllstoff zu verwenden, der in vielen Modifikationen heute kommerziell erhältlich ist.

Für die nucleophil substituierbare Abgangsgruppe sind folgende Reste geeignet: Iodid-, Bromid-, Chlorid-, Fluorid-, Hydroxid-, Cyanid-, Hydrogensulfat- (HSO₄⁻), Triflat-(CF₃SO₃⁻), Methylsulfat- (CH₃SO₄⁻), Mesylat- (CH₃SO₃⁻), Tosylat-, (CH₃-C₆H₄-SO₃⁻), Carboxylat- (RCO₂⁻), Amid- (R₂N⁻), Thiolat- (RS⁻) oder Alkoholat-Abgangsgruppen (RO⁻) mit jeweils R unabhängig voneinander H, eine verzweigte oder unverzweigte, gesättigte oder ungesättigte, substituierte oder unsubstituierte, aliphatische, aromatische oder gemischt aliphatische/aromatische einbindige Kohlenwasserstoffgruppe, bevorzugt Methyl (-CH₃), Ethyl (-CH₂-CH₃), n-Propyl (-(CH₂)₂-CH₃), Isopropyl (-CH(CH₃)-CH₃), n-Butyl (-(CH₂)₃-CH₃), Isobutyl (-CH₂-CH(CH₃)-CH₃), t.-Butyl (-C(CH₃)₃), n-Pentyl (-(CH₂)₄-CH₃), n-Hexyl (-(CH₂)₅-CH₃), besonders bevorzugt H, Methyl (-CH₃), Ethyl (-CH₂-CH₃) oder n-Propyl (-(CH₂)₂-CH₃).
Bevorzugte Abgangsgruppen sind Iodid-, Bromid-, Chlorid-, Hydroxid-, Hydrogensulfat-(HSO₄⁻), Methylsulfat-(CH₃SO₄⁻), Triflat- (CF₃SO₃⁻), Mesylat- (CH₃SO₃⁻) und Tosylat-Abgangsgruppen (CH₃-C₆H₄-SO₃⁻), besonders bevorzugt sind Iodid-, Bromid- und Chlorid-Abgangsgruppen.
Als hydrolysierbare Gruppen für die kovalente Anbindung des Silans an den Füllstoff eignen sich alle für Silanisierungsreaktionen üblichen und dem Fachmann bekannten und bereits oben definierten Gruppen. Beispiele hierfür sind Methoxy- und Ethoxy-Gruppen.

Als Spacergruppe (R_{Sp}) am Si-Atom empfiehlt sich eine unverzweigte, gesättigte, einfach oder mehrfach ungesättigte, aliphatische oder gemischt aliphatische/aromatische zweibindige C₃ bis C₃₀ Kohlenwasserstoffgruppe mit einer endständig angeordneten Abgangsgruppe.
Bevorzugte Spacergruppen sind die unverzweigten Alkandiyle -(CH₂)ₓ- mit x = 3 bis 30, hiervon besonders bevorzugt -(CH₂)ₓ- mit x = 8 bis 16.

Bevorzugt werden als Hydroperoxyverbindungen Hydroperoxide oder Peroxycarbonsäuren der allgemeinen Struktur III:

R₃-O-O-H (III)

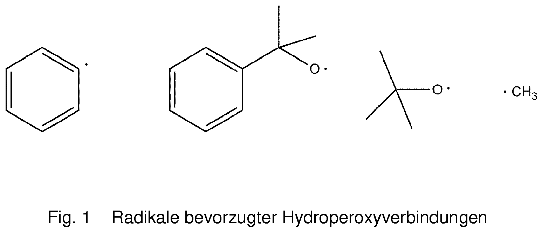

R₃ ist hierbei eine verzweigte oder unverzweigte, gesättigte oder ungesättigte, substituierte oder unsubstituierte, aliphatische, aromatische oder gemischt aliphatische/aromatische einbindige Kohlenwasserstoffgruppe, bevorzugt Methyl (-CH₃), Ethyl (-CH₂-CH₃), n-Propyl (-(CH₂)₂-CH₃), Isopropyl(-CH(CH₃)-CH₃), n-Butyl (-(CH₂)₃-CH₃), Isobutyl (-CH₂-CH(CH₃)-CH₃), t.-Butyl (-C(CH₃)₃), 1,1-Dimethylbenzyl (-CH₂-C(CH₃)₂-C₆H₅), 1-Methylbenzyl (-CH₂-CH(CH₃)-C₆H₅), Benzyl (-CH₂-C₆H₅), Acetyl (-CO-CH₃), Propanoyl (-CO-CH₂-CH₃), Benzoyl (-CO-C₆H₅), m-Chlorbenzoyl (-CO-C₆H₄Cl) und p-Chlorbenzoyl (-CO-C₆H₄Cl). Besonders bevorzugt sind Methyl (-CH₃), t.-Butyl (-C(CH₃)₃), 1,1-Dimethylbenzyl (-CH₂-C(CH₃)₂-C₆H₅), Acetyl (-CO-CH₃) und Benzoyl (-CO-C₆H₅), bzw. solche die die in Abbildung 1 dargestellten Radikale bilden.

Die Base ist so zu wählen, dass sie die basenkatalysierte nucleophile Substitution ermöglicht, d.h. im Falle der bevorzugt verwendeten Hydroperoxyverbindungen diese zu deprotonieren. Bevorzugte Basen sind die Hydroxide der Alkali- und Erdalkalimetalle. Besonders bevorzugt sind hiervon Natriumhydroxid und Kaliumhydroxid.

Weiterhin ist es bevorzugt, die Substitution mit Peroxid am Silan als Phasentransferkatalyse durchzuführen. Der Phasentransferkatalysator wird dazu verwendet, dass Anion der Hydroperoxyverbindung in die organische Phase zu überführen. Geeignete Phasentransferkatalysatoren sind Tetraalkylammoniumverbindungen (z.B. Bu₄NHSO₄), Phosphoniumsalze, Onium-Verbindungen und Polyethylenglykole.

Die Verfahrensparameter, Temperatur, Reaktionsdauer, Eduktkonzentrationen und Lösungsmittel sind vom Fachmann an die Erfordernisse anzupassen.

In Weiterbildung der Erfindung ist vorgesehen, dass zugleich mit der Umsetzung mit der Hydroperoxyverbindung oder anschließend mit wenigstens einem weiteren Nucleophil, vorzugsweise ausgewählt aus der Gruppe der Alkohole, Amine, Thiole oder Carbonsäuren umgesetzt wird, um anstelle bzw. neben den Peroxygruppen weitere funktionelle Gruppen auf der Feststoffoberfläche kovalent anzubinden. Diese zusätzliche Verfahrensvariante ist für alle drei der teils erst nachfolgend noch geschilderten Verfahren möglich. Der Füllstoff kann dadurch zusätzliche Eigenschaften erhalten, die für bestimmte Anwendungen von Vorteil sind.

Geeignete Nucleophile sind Verbindungen der allgemeinen Formel IV

Nu-R₄-X (IV)

wobei Nu die nucleophile Gruppe, R₄ eine organische Atomgruppierung und X eine funktionelle Gruppe bezeichnet. Nucleophile Gruppen können Alkohol- (-OH), Amino-(-NH2), Thiol- (-SH) oder Carboxylgruppen (-COOH) sein. Bevorzugt sind Alkohol-(-OH) oder Aminogruppen (-NH2). X ist eine endständige Methyl- (-CH3), Ethenyl-(-C=CH₂), Ethinyl- (-C=CH), Thiol- (-SH), Amino- (-NH2), Hydroxy- (-OH), Carboxyl-(-COOH), Epoxy-, Acrylat- oder Methacrylatgruppe. Bevorzugt sind Methyl- (-CH₃), Ethenyl- (-C=CH₂), Thiol- (-SH), Amino- (-NH2), Acrylat- oder Methacrylatgruppen. R₄ ist eine verzweigte oder unverzweigte, gesättigte oder ungesättigte, substituierte oder unsubstituierte, aliphatische, aromatische oder gemischt aliphatische/aromatische mehrbindige Kohlenwasserstoffgruppe. Die Kohlenwasserstoffgruppe kann Seitenketten und/oder Heteroatome enthalten.
Bevorzugte Spacergruppen (R_{Sp}) sind die unverzweigten Alkandiyle -(CH₂)ₓ- mit x = 1 bis 30, hiervon besonders bevorzugt -(CH₂)ₓ- mit x = 1 bis 12.

Ein weiterer Aspekt der Erfindung bezieht sich auf ein weiteres Herstellungsverfahren mit den folgenden Schritten:
- Silanisieren des partikulären Feststoffs mit einem Organosilan, das zur Kondensation mit einem zwei- oder mehrfach funktionellen Säurechlorid befähigt ist, insbesondere einem Aminoalkylsilan, Carboxyalkylsilan oder Hydroxyalkylsilan, oder Vorlegen eines in dieser Weise silanisierten Füllstoffs
- Umsetzen des Silanisierungsprodukts mit dem Säurechlorid unter Bildung eines Amids, Anhydrids oder Esters;
- Umsetzen des daraus erhaltenen Produkts mit einer Hydroperoxyverbindung.

Bei diesem Verfahren geschieht die kovalente Anbindung der Peroxygruppen mit Hilfe von Organosilanen, die in der Lage sind, mit organischen Säurechloriden kovalente Bindungen auszubilden. Diese müssen wiederum für das Verfahren wenigstens bifunktionell sein. Bei mehr als einer Säurechloridfunktion pro Molekül, wird einerseits die kovalente Bindung zum Silan geknüpft und andererseits bleiben reaktive Säurechloridfunktionalitäten an der Oberfläche erhalten. Diese können in einem weiteren Schritt mit Hydroperoxyverbindungen umgesetzt werden, wobei die gleichen Hydroperoxyverbindungen bevorzugt sind, wie oben bereits angegeben.

Als organofunktionelle Silane, die mit organischen Säurechloriden kovalente Bindungen ausbilden können, werden bevorzugt solche eingesetzt, die am Spacer (R_{Sp}) eine vorzugsweise endständige Amino-, Carboxyl- oder Hydroxyfunktionalität besitzen. Die Silanisierung erfolgt unter den üblichen Bedingungen, bevorzugt katalysiert und mit den üblichen bereits oben genannten hydrolysierbaren Gruppen, die das Siliciumatom über eine Sauerstoffbrücke an den Füllstoff binden. Als Spacergruppe (R_{Sp}) zwischen Si-Atom und der vorzugsweise endständig angeordneten Amino-, Carboxyl- oder Hydroxyfunktionalität empfiehlt sich eine verzweigte oder unverzweigte, gesättigte, einfach oder mehrfach ungesättigte, aliphatische oder gemischt aliphatische/aromatische zweibindige C₁ bis C₃₀ Kohlenwasserstoffgruppe. Bevorzugte Spacergruppen (R_{Sp}) sind die unverzweigten Alkandiyle -(CH₂)ₓ- mit x = 1 bis 30, hiervon besonders bevorzugt -(CH₂)ₓ- mit x = 1 bis 12.

Als Kupplungsreagenz sind alle organischen Säurechloride denkbar, die mindestens zwei Säurechloridfunktionen pro Molekül aufweisen. Hierbei können die Säurechloridgruppen im Falle des Oxalylchlorids direkt oder durch Reste miteinander verbunden sein. Geeignete Reste zwischen den Säurechloridgruppen sind verzweigte oder unverzweigte, gesättigte oder ungesättigte, substituierte oder unsubstituierte, aliphatische, aromatische oder gemischt aliphatische/aromatische mehrbindige Kohlenwasserstoffgruppen. Bevorzugt sind die unverzweigten Alkandiyle -(CH₂)ₓ- mit x = 1 bis 12, hiervon besonders bevorzugt -(CH₂)ₓ- mit x = 1 bis 6.

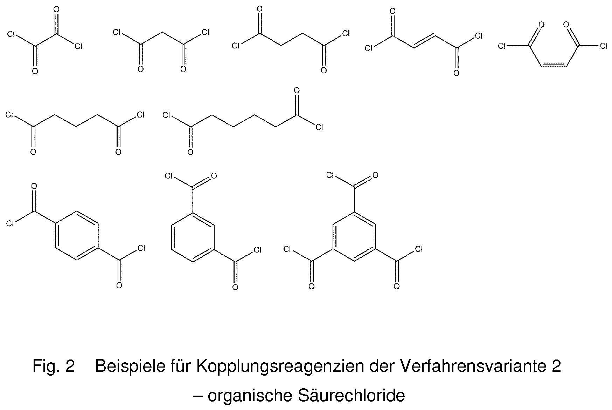

Beispiele besonders bevorzugter Kupplungsreagenzien sind Oxalylchlorid ((COCl)₂), Malonsäuredichlorid (COCl-CH₂-COCl), Succinylchlorid (COCl-(CH₂)₂-COCl), Fumarsäuredichlorid (COCl-CH=CH-COCl), Maleinsäuredichlorid (COCl-CH=CH-COCl), Glutarylchlorid (COCl-(CH₂)₃-COCl), Adipinsäurechlorid (COCl-(CH₂)₄-COCl), 1,3-Benzoldicarbonsäuredichlorid (C₆H₄(COCl)₂), 1,4-Benzoldicarbonsäuredichlorid (C₆H₄(COCl)₂) und 1,3,5-Benzoltricarbonsäuretrichlorid (C₆H₃(COCl)₃). Diese sind nochmals in Abbildung 2 dargestellt.

Das Verfahren kann in der Weise abgewandelt werden, dass neben den Hydroperoxyverbindungen andere Nucleophile (z. B. Amine, Thiole, Carbonsäuren oder Alkohole) angeboten werden (gleichzeitig oder sequentiell), um mit dem Säurechlorid zu reagieren. Auf diese Weise lässt sich eine Vielzahl verschiedenster Verbindungen bzw. Funktionalitäten auf der Oberfläche hydrolysestabil kovalent anbinden. Diese zusätzlichen Gruppen dienen zur Modifikation der Grenzfläche zwischen Füllstoff und Polymer bei Einsatz des so erhaltenen Feststoffmaterials in verstärkten Kunststoffen bzw. Hybridmaterialien. Die Grenzfläche beider Materialien und die Art und Weise der Wechselwirkung beeinflusst die Eigenschaften des Zielmaterials entscheidend. Polaritäten und Polaritätsunterschiede in den Materialien können auf diese Weise beeinflusst werden.

Geeignete Nucleophile sind Verbindungen der allgemeinen Formel IV

Nu-R₄-X (IV)

wobei Nu die nucleophile Gruppe, R₄ eine organische Atomgruppierung und X eine funktionelle Gruppe bezeichnet. Nucleophile Gruppen können Alkohol- (-OH), Amino-(-NH₂), Thiol- (-SH) oder Carboxylgruppen (-COOH) sein. Bevorzugt sind Alkohol-(-OH) oder Aminogruppen (-NH₂). X ist eine endständige Methyl- (-CH₃), Ethenyl-(-C=CH₂), Ethinyl- (-C=CH), Thiol- (-SH), Amino- (-NH₂), Hydroxy- (-OH), Carboxyl-(-COOH), Epoxy-, Acrylat- oder Methacrylatgruppe. Bevorzugt sind Methyl- (-CH₃), Ethenyl- (-C=CH₂), Thiol- (-SH), Amino- (-NH₂), Acrylat- oder Methacrylatgruppen. R₄ ist eine verzweigte oder unverzweigte, gesättigte oder ungesättigte, substituierte oder unsubstituierte, aliphatische, aromatische oder gemischt aliphatische/aromatische mehrbindige Kohlenwasserstoffgruppe. Die Kohlenwasserstoffgruppe kann Seitenketten und/oder Heteroatome enthalten.
Bevorzugte Spacergruppen (R_{Sp}) sind die unverzweigten Alkandiyle -(CH₂)ₓ- mit x = 1 bis 30, hiervon besonders bevorzugt -(CH₂)ₓ- mit x = 1 bis 12.

Die Reaktion zwischen dem mit Säurechlorid modifizierten Feststoff und der Hydroperoxyverbindung wird vorzugsweise im basischen Milieu durchgeführt. Die eingesetzten Basen (z. B. Triethylamin, Pyridin, ...) dienen dazu, entstehendes HCl abzufangen und das Reaktionsgleichgewicht auf die Seite der Produkte zu verschieben. Der Einsatz der Basen ist optional. Die gesamte Synthese ist wasserfrei durchzuführen.

Die Verfahrensparameter, Druck, Temperatur, Konzentration, Reaktionsdauer sind vom Fachmann in Analogie zu bekannten Verfahren für die Teilreaktionen anzupassen.

Ein weiteres Verfahren gemäß einem dritten Aspekt der vorliegenden Erfindung umfasst die folgenden Verfahrensschritte:
- Silanisieren des partikulären Feststoffs mit einem Acryloxy-, Methacryloxy- oder Epoxysilan oder Vorlegen eines in dieser Weise silanisierten Füllstoffs;
- Umsetzen des Feststoffs während der Silanisierung in einer Eintopfreaktion oder Umsetzen des Silanisierungsprodukts (basenkatalysiert) mit einer Hydroperoxyverbindung.

Bei dieser Verfahrensvariante wird der Feststoff zuerst mit einem Acryloxy- oder Methacryloxysilan vorsilanisiert, wobei die Acrylate als Coaktivatoren fungieren können. Dies hat den Vorteil, dass bei einer unvollständigen Reaktion auch die nicht umgesetzten Acrylgruppen in der Lage sind mit dem Polymer in Wechselwirkung zu treten. Im Folgeschritt addiert sich das Peroxyanion an die elektronenarme Doppelbindung des Silans und wird so auf der Oberfläche kovalent eingeführt.

Die hydrolysierbaren Gruppen der Acryloxy- oder Methacryloxysilane sind dieselben wie oben beschrieben. Auch der Spacer (Rₛₚ) ist derselbe wie im ersten Aspekt der Erfindung (Seite 10) beschrieben. Beispiele für geeignete Silane sind 3-(Methacryloxy)propyltrimethoxysilan oder 3-(Acryloxy)propyltri-methoxysilan. Als Hydroperoxyverbindungen werden ebenfalls die oben schon beschriebenen eingesetzt.

In bevorzugter Ausführungsform wird die Anbindung der Peroxide phasentransferkatalysiert.

Anstelle der Acryloxy- oder Methacryloxysilane können gemäß einem weiteren Aspekt der Erfindung Epoxysilane eingesetzt werden, wobei auch hier die hydrolisierbaren Gruppen und der Spacer (Rₛₚ) dieselben sind wie im ersten Aspekt der Erfindung. Bei dieser Variante wird das Peroxyanion in einer Ringöffnung an die Epoxygruppe addiert. Es ergibt sich wiederum eine kovalente Anbindung der Peroxygruppe auf der Oberfläche. Die erhaltenen Gruppen sind dabei jeweils Peroxyorganosiloxangruppen, die auf der Feststoffoberfläche verankert sind.

Als Epoxysilane können beispielsweise 3-Glycidyloxypropyltrimethoxysilan oder 3-Glycidyloxypropyltriethoxysilan verwendet werden.

Der partikuläre Feststoff gemäß der Erfindung ist grundsätzlich immer dann als Füllstoff verwendbar, wenn in der zu polymerisierenden oder zu vernetzenden Mischung ein Peroxid als Additiv eingesetzt wird, wie bei der radikalischen Polymerisation mit Peroxid und der radikalischen Vernetzung mit Peroxid. Bei Verwendung entsprechend hoher Konzentrationen des partikulären Feststoffs nach der Erfindung kann dieser das als Additiv eingesetzte Peroxid sogar vollständig ersetzen. Für diese Anwendungszwecke wurden die partikulären Feststoffe nach der Erfindung bevorzugt entwickelt, so dass sie hierfür besonders geeignet sind. Die gleichzeitige Verwendung anderer üblicher Additive zusammen mit dem funktionalisierten Füllstoff nach dieser Erfindung ist nicht ausgeschlossen. Solche Additive sind dem Fachmann bekannt, so dass sie hier nicht im Einzelnen erwähnt werden.

Als Polymere bzw. Elastomere der Polymermischungen bzw. Elastomere, bei denen der partikuläre Feststoff nach der Erfindung als Füllstoff verwendet werden kann, können daher alle der fachkundigen Person bekannte Polymere bzw. Elastomere verwendet werden.

Die Erfindung umfasst auch eine heiß vernetzbare Polymermischung, insbesondere eine Kautschukmischung, die einen partikulären Feststoff nach der Erfindung enthält. Dabei wird der partikuläre Feststoff innerhalb der Mischung als Füllstoff verwendet, wie vorstehend schon beschrieben.

Die Erfindung umfasst weiter technische Polymer- oder Elastomerartikel, die ein in das Polymer oder Elastomer eingebundenen partikulären Feststoff nach einem der Ansprüche 1 oder 2 enthalten. Derartige Artikel sind insbesondere Reifen, Reifenteile, Riemen, Riementeile, Luftfedern, Förderbänder, Schläuche und Dichtungen, sowie alle sonstigen Teile und Bauteile, die aus der heiß vernetzbaren Polymermischung nach der Erfindung oder unter Mitverwendung dieser Mischung hergestellt wurden.

Im Folgenden wird die Erfindung anhand von Ausführungsbeispielen näher erläutert, die allein der Illustration der verschiedenen Verfahrensweisen und möglicher Produkte dienen sollen, ohne Beschränkungen der Allgemeinheit der vorstehend beschriebenen Erfindung.

### Synthesebeispiel 1 (zweistufige Peroxyalkylsilanisierung) nach Aspekt 1:

Schritt 1: 15 g der gefällten Kieselsäure Ultrasil® VN3 wurden in 450 ml Toluol dispergiert. Die Suspension wurde auf 80 °C erwärmt. Unter Rühren wurden 4,68 ml DBU und 8,73 ml Bromoundecyltrimethoxysilane in genannter Reihenfolge zur Suspension gegeben. Der Ansatz wurde für 2 h bei 80 °C gerührt. Nach dem Abkühlen wurde das Reaktionsgemisch über eine P4-Fritte abgefrittet und der Filterkuchen mehrmals mit Ethanol gewaschen. Der erhaltene Feststoff wurde im Vakuum getrocknet.

Der Kohlenstoffanteil der silanisierten Kieselsäure wurde auf w(C) = 7,3 % mittels Elementaranalyse bestimmt. Dies entspricht einer theoretischen Oberflächenbelegung von 0,55 mmol Silan pro Gramm Kieselsäure.

Schritt 2: In 30 ml THF wurden 0,174 g gemörsertes KOH, 0,105 g Bu₄NHSO₄ und 0,48 ml tert.-Butylhydroperoxid (70 %ig in H₂O) bei RT unter Rühren zusammengegeben. Zu diesem Gemisch wurden 0,75 g der vorsilanisierten Kieselsäure aus Schritt 1 gegeben. Der Ansatz wurde für 2 h unter Rühren auf 50 °C erhitzt. Nach dem Abkühlen wurde das Reaktionsgemisch über eine P4-Fritte abgefrittet und zweimal mit 30 ml Wasser, zweimal mit 30 ml Wasser/THF-Gemisch (1:1), zweimal mit 30 ml Wasser und schließlich viermal mit 30 ml THF gewaschen. Der erhaltene Feststoff wurde im Vakuum getrocknet.

### Charakterisierung des Produkts

Mittels iodometrischer Titration unter Sauerstoffausschluss wurde die Peroxidkonzentration der synthetisierten Füllstoffpartikel ermittelt. Die Titration ergab eine Peroxidkonzentration von 0,30 mmol Peroxidgruppen pro Gramm Füllstoff. Dies entspricht einer Ausbeute von 55 %.

Durch die Oberflächenfunktionalisierung kann es zu Einbußen in der BET-Oberfläche kommen. Für die synthetisierten Füllstoffpartikel wurden BET-Oberflächen von bis zu 170 m²/g bestimmt, wobei das Ausgangsmaterial eine BET-Oberfläche von 175 m²/g hat.

Um die Zersetzungstemperatur der gebildeten Peroxidfunktionalität zu bestimmen, wurde von den synthetisierten Füllstoffpartikeln eine DSC durchgeführt. Als Blindwert wurde außerdem die in Schritt 1 vorsilanisierte Kieselsäure vermessen. Es zeigt sich, dass auf der mit dem Bromalkylsilan vorsilanisierten Kieselsäure kein exothermes Signal gefunden werden kann. Nach der in Schritt 2 beschriebenen Reaktion ist hingegen ein deutliches exothermes Signal im Bereich von ca. 170 bis 180 °C identifizierbar. Damit liegt die Zersetzungstemperatur für die aufgepropften Peroxidgruppen in dem gewünschten, für peroxidische Vernetzungen üblichen, Bereich und die synthetisierten Füllstoffpartikel lassen sich problemlos in Polymere einmischen. Die hohe Zersetzungstemperatur ist ein Nachweis für die kovalente Bindung des Peroxids, da die Zersetzungstemperatur des eingesetzten Hydroperoxids lediglich ca. 90 °C beträgt.

Die in Schritt 2 hergestellten Füllstoffpartikel wurden mittels Thermodesorption untersucht. Hierbei wurde zunächst etwas Probe eingewogen und in einem Heliumstrom für 15 min auf 100 °C getempert. Ein definierter Teil des hierbei in einer Kühlfalle ausgefrorenen Materials wurde dann mittels GC/MS untersucht. Anschließend wurde die gleiche Probe für weitere 15 min bei 180 °C getempert und wieder ausgefroren und hinterher analysiert.

Bei 100 °C wurden lediglich etwas Lösungsmittel und eine geringe Menge tert.-Butanol detektiert, welches von der Peroxidgruppe stammt. Dies zeigt, dass die aufgepropften Peroxidgruppen bei 100 °C für eine gewisse Zeit stabil sind und sich nur geringfügig zersetzen.

Bei 180 °C wurden erneut Lösungsmittel, darin enthaltenes BHT und ein Fragment des Phasentransferkatalysators detektiert. Neben diesen Verunreinigungen ist erneut tert.-Butanol in stark erhöhter Konzentration nachgewiesen worden. Der starke Anstieg des tert.-Butanol Signals zeigt, dass bei 180 °C eine Zersetzung des aufgepropften Peroxids stattgefunden hat. Es konnte somit direkt die erfolgreiche Bildung der Peroxidfunktionalität auf der Kieselsäureoberfläche nachgewiesen werden.

### Füllstoff-Polymer-Anbindung

Um die Anbindung von Polymer auf der in Schritt 2 beschriebenen Kieselsäure zu untersuchen, wurde eine Bound Rubber Analyse durchgeführt. Als Referenzen dienen hierbei unbehandeltes Ultrasil® VN3 und mit Dynasylan® Octeo vorsilanisiertes Ultrasil® VN3, um den Einfluss der Hydrophobierung der Kieselsäure nachzustellen. Von den Füllstoffen wurden je 10 phr in einen amorphen EPDM (BUNA EPG 3440) auf einer Walze eingemischt. Zu den Mischungen wurde kein Vernetzer gegeben. Damit die funktionalisierte Kieselsäure mit dem Polymer reagieren konnte, wurden die Mischungen für 20 min bei 180 °C geheizt. Der Bound Rubber Gehalt wurde sowohl an den Rohmischungen als auch an den geheizten Klappen bestimmt.

Um den Bound Rubber zu ermitteln, wurden von den Mischungen je 1,5 g Material kleingeschnitten (Würfel mit ca. 2 mm Kantenlänge), Cyclohexan zugegeben und für 16 h im Ultraschallbad am Rückfluss erhitzt. Die erhaltenen Suspensionen wurden zentrifugiert (10000 rpm, 30 min) nochmals in Cyclohexan aufgenommen und dann erneut zentrifugiert. Die erhaltenen Füllstoffpartikel wurden über Nacht im Trockenschrank bei 85 °C getrocknet und anschließend sowohl von den Rohstoffen als auch von den extrahierten Füllstoffpartikeln thermogravimetrische Analysen (TGA) durchgeführt.

Die TGA der Füllstoffe vor dem Einmischen zeigt, dass der Massenverlust bei unbehandeltem Ultrasil® VN3 erwartungsgemäß am geringsten und auf die Abgabe von Wasser zurückzuführen ist. Bei den Kieselsäuren spiegeln sich die unterschiedlichen Kettenlängen in den Massenverlusten wieder und decken sich mit den Ergebnissen aus der Kohlenstoffanalyse.

Die aus Rohmischungen extrahierten Füllstoffpartikel zeigen alle Masseverluste, die auf annähernd gleichem Niveau liegen. Die peroxidfunktionalisierten Füllstoffpartikel zeigen in der Rohmischung keine veränderten Effekte gegenüber den Referenzen. In der DSC ist auch weiterhin das exotherme Signal für die Peroxidgruppen deutlich sichtbar.

Die Massenverluste der extrahierten Füllstoffpartikel des unbehandelten Ultrasil® VN3 und des mit Dynasylan® Octeo vorsilanisierten Ultrasil® VN3 aus den geheizten Mischungen liegen auf dem gleichen Niveau wie die der Rohmischungen. Im Gegensatz hierzu ist bei den peroxidfunktionalisierten Füllstoffpartikeln eine deutliche Zunahme (20 %) des Massenverlustes sichtbar. Auch das noch in den Rohmischungen beobachtete exotherme Signal in der DSC ist hier nicht mehr vorhanden. Hieraus lässt sich schließen, dass die Peroxidgruppen zu einer Anbindung des Polymers geführt haben.

Die Füllstoffpartikel mit kovalent aufgepropften Peroxidfunktionalitäten sind demnach in der Lage mit vernetzbaren bzw. "vulkanisierbaren" Polymeren zu reagieren und selbige fest an ihrer Oberfläche anzubinden. Hierdurch können die physikalischen und dynamischen Eigenschaften der Vulkanisate verbessert werden.

### Synthesebeispiel 2 (dreistufige Peroxyorganylsilanisierung über

### Amin/Säurechlorid) nach Aspekt 2:

Schritt 1: 15 g der gefällten Kieselsäure Ultrasil® VN3 wurden in 450 ml Toluol dispergiert. Die Suspension wurde auf 80 °C erwärmt. Unter Rühren wurden 4,68 ml DBU und 4,74 ml Aminopropyltrimethoxysilan in genannter Reihenfolge zur Suspension gegeben. Der Ansatz wurde für 2 h bei 80 °C gerührt. Nach dem Abkühlen wurde das Reaktionsgemisch über eine P4-Fritte abgefrittet und der Filterkuchen mehrmals mit Ethanol gewaschen. Der erhaltene Feststoff wurde im Vakuum getrocknet.

Der Kohlenstoffanteil der silanisierten Kieselsäure wurde auf w(C) = 4,0 % mittels Elementaranalyse bestimmt. Dies entspricht einer theoretischen Oberflächenbelegung von 1,11 mmol Silan pro Gramm Kieselsäure.

Schritt 2: Unter Schutzgasatmosphäre (Ar) wurde in einem ausgeheiztem Kolben 1,5 g der in Schritt 1 vorsilanisierten Kieselsäure vorgelegt und in 20 ml absolutem DCM dispergiert. Hierzu wurden 1,18 ml 1,3,5-Benzoltricarbonsäuretrichlorid gegeben. Das Reaktionsgemisch wurde für 16 h im Ultraschallbad am Rückfluss erhitzt. Nach dem Abkühlen wurde das Reaktionsgemisch über eine P4-Fritte abgefrittet und fünfmal mit je 20 ml absolutem DCM gewaschen, wobei auch hier die Schutzgasbedingungen permanent aufrechterhalten wurden. Der erhaltene Feststoff wurde für 2 h bei 10⁻² mbar getrocknet.

Schritt 3: Die in Schritt 2 hergestellte oberflächenfunktionalisierte Kieselsäure wurde vollständig in einem Kolben unter Schutzgasatmosphäre (Ar) vorgelegt und auf 0 °C abgekühlt. Anschließend wurden 20 ml absoluter MTBE, 1,84 ml Triethylamin und 1,60 ml tert.-Butylhydroperoxid (5,5 M in Decan) zugegeben. Der Ansatz wurde für 5 h bei 0 °C gerührt. Das Reaktionsgemisch wurde über eine P4-Fritte abgefrittet, zweimal mit je 20 ml EtOH, zweimal mit je 20 ml Wasser, zweimal mit je 20 ml Wasser/THF-Gemisch (1:1), zweimal mit je 20 ml Wasser und schließlich viermal mit je 20 ml THF gewaschen. Der erhaltene Feststoff wurde im Vakuum getrocknet.

### Charakterisierung des Produkts

Mittels iodometrischer Titration unter Sauerstoffausschluss wurde die Peroxidkonzentration der synthetisierten Füllstoffpartikel ermittelt. Die Titration ergab eine Peroxidkonzentration von 0,31 mmol Peroxidgruppen pro Gramm Füllstoff.

Durch die Oberflächenfunktionalisierung kann es zu Einbußen in der BET-Oberfläche kommen. Für die hier synthetisierten Füllstoffpartikel wurde eine BET-Oberfläche von 126 m²/g bestimmt, wobei das Ausgangsmaterial eine BET-Oberfläche von 175 m²/g hatte.

Der pH-Wert der Füllstoffpartikel liegt im schwach sauren Bereich zwischen pH 5 und 7.

Die Zersetzungstemperatur der gebildeten peroxidfunktionalisierten Füllstoffpartikel wurde mittels DSC bestimmt. Des Weiteren wurden vom vorsilanisierten Ultrasil® VN3 aus Schritt 1 und von den mit Säurechlorid behandelten Füllstoffpartikeln aus Schritt 2 nach deren Hydrolyse ebenfalls eine DSC als Blindwerte durchgeführt. Für beide Vorstufen bzw. Blindwerte können keine exothermen Signale in der DSC gefunden werden. Der peroxidfunktionalisierte Füllstoff zeigt hingegen bei 160 °C ein deutliches exothermes Signal. Damit liegt die Zersetzungstemperatur für die aufgepropften Peroxidgruppen in dem gewünschten Bereich.

Weiter zeigt sich hieraus die kovalente Anbindung des Peroxids, da die Zersetzungstemperatur des eingesetzten Hydroperoxids lediglich ca. 90 °C beträgt.

Analog zu Beispiel 1 wurden auch hier die hergestellten Füllstoffpartikel mittels Thermodesorption untersucht. Aufgrund der niedrigeren Zersetzungstemperatur wurde hier jedoch bei 80 °C und 160 °C gearbeitet. Bei 80 °C wurde nur sehr wenig tert.-Butanol detektiert. Dies zeigt, dass sich das aufgepropfte Peroxid bei 80 °C nur geringfügig zersetzt.

Bei 160 °C wurden geringfügig Ethanol und BHT nachgewiesen. Neben diesen Verunreinigungen konnte wie bei Beispiel 1 ein starker Anstieg der tert.-Butanolkonzentration verzeichnet werden. Der starke Anstieg des tert.-Butanol-Signals zeigt, dass bei 160 °C eine Zersetzung des aufgepropften Peroxids stattgefunden hat. Es konnte somit direkt die erfolgreiche Bildung der Peroxidfunktionalität auf der Kieselsäureoberfläche nachgewiesen werden.

### Füllstoff-Polymer-Anbindung

Um die Anbindung von Polymer auf der in Schritt 3 beschriebenen Kieselsäure zu untersuchen, wurde eine Bound Rubber Analyse durchgeführt. Als Referenzen dienen hierbei unbehandeltes Ultrasil® VN3 und mit Dynasylan® Octeo vorsilanisiertes Ultrasil® VN3, um den Einfluss der Hydrophobierung der Kieselsäure nachzustellen. Des Weiteren wurden die in Schritt 1 hergestellten, in Schritt 2 hergestellten und hydrolisierten Partikel und die in Schritt 3 hergestellten peroxidfunktionalisierten Füllstoffpartikel eingemischt.

Es wurden folgende Proben vermessen:
VN3/unbehandelt
VN3/Dynasylan® Octeo
VN3/Aminosilan
VN3/Aminosilan/1,3,5-Benzoltricarbonsäuretrichlorid/hydrolisiert
VN3/Aminosilan/1,3,5-Benzoltricarbonsäuretrichlorid/TBHP

Von den Füllstoffen wurden je 10 phr in einen amorphen EPDM (BUNA EPG 3440) auf einer Walze eingemischt. Zu den Mischungen wurde kein Vernetzer gegeben. Damit die funktionalisierte Kieselsäure mit dem Polymer reagieren konnte, wurden die Mischungen für 20 min bei 160 °C geheizt. Der Bound Rubber Gehalt wurde sowohl an den Rohmischungen als auch an den geheizten Klappen bestimmt.

Um den Bound Rubber zu ermitteln, wurden von den Mischungen je 1,5 g Material kleingeschnitten (Würfel mit ca. 2 mm Kantenlänge), Cyclohexan zugegeben und für 16 h im Ultraschallbad am Rückfluss erhitzt. Die erhaltenen Suspensionen wurden zentrifugiert (10000 rpm, 30 min) nochmals in Cyclohexan aufgenommen und dann erneut zentrifugiert. Die erhaltenen Füllstoffpartikel wurden über Nacht im Trockenschrank bei 85 °C getrocknet und anschließend sowohl von den Rohstoffen als auch von den extrahierten Füllstoffpartikeln thermogravimetrische Analysen (TGA) durchgeführt.

Die TGA der Füllstoffe vor dem Einmischen zeigt, dass der Massenverlust bei unbehandeltem Ultrasil® VN3 erwartungsgemäß am geringsten und auf die Abgabe von Wasser zurückzuführen ist. Bei den Kieselsäuren spiegeln sich die unterschiedlichen Kettenlängen in den Massenverlusten wieder und decken sich mit den Ergebnissen aus der Kohlenstoffanalyse. Auch die schrittweise Zunahme an Organik auf der Oberfläche ist in den einzelnen Reaktionsschritten beobachtbar.

Es zeigt sich, dass in den Bound Rubber Bestimmungen der Rohmischungen bei allen fünf Proben die Masseverluste auf einem ähnlichen Niveau liegen. Die peroxidfunktionalisierten Füllstoffpartikel zeigen in der Rohmischung keine veränderten Effekte gegenüber den Referenzen. Mittels DSC lässt sich das Peroxid auch noch in der Rohmischung nachweisen.

Die Masseverluste der extrahierten Füllstoffpartikel des unbehandelten Ultrasil® VN3 und des mit Dynasylan® Octeo vorsilanisierten Ultrasil® VN3 aus den geheizten Mischungen liegen auf einem ähnlichen Niveau wie die der Rohmischungen. Bei den extrahierten Füllstoffen mit der Amino- bzw. Carboxylfunktionalitäten ist jeweils eine geringe Zunahme des Bound Rubber zu beobachten. Im Gegensatz hierzu ist bei den peroxidfunktionalisierten Füllstoffpartikeln eine deutliche Zunahme (26 %) des Masseverlustes sichtbar. In der DSC ist das exotherme Signal des Peroxids verschwunden. Hieraus lässt sich schließen, dass die Peroxidgruppen zu einer Anbindung des Polymers geführt haben.

In den beigefügten Abbildungen ist gezeigt:
- Abbildung 1: - Radikale bevorzugter Hydroperoxyverbindungen
- Abbildung 2: - Beispiele für Kopplungsreagenzien der Verfahrensvariante 2 - organische Säurechloride

## Patentansprüche

1. Partikulärer Feststoff aus Kieselsäure, **dadurch gekennzeichnet, dass** er Peroxyorganosiloxangruppen aufweist und
die Peroxy-organosiloxangruppen folgende Struktur II besitzen: 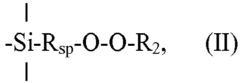
wobei Rₛₚ eine lineare oder verzweigte Spacergruppe mit aliphatischer, arylischer oder gemischt aliphatisch/arylischer Struktur ist,
und R₂ eine verzweigte oder unverzweigte, gesättigte oder ungesättigte, substituierte oder unsubstituierte, aliphatische, aromatische oder gemischt aliphatische/aromatische einbindige Kohlenwasserstoffgruppe, bevorzugt Methyl (-CH₃), Ethyl (-CH₂-CH₃), n-Propyl (-(CH₂)₂-CH₃), Isopropyl(-CH(CH₃)-CH₃), n-Butyl (-(CH₂)₃-CH₃), Isobutyl (-CH₂-CH(CH₃)-CH₃), t.-Butyl (-C(CH₃)₃), 1,1-Dimethylbenzyl (-CH₂-C(CH₃)₂-C₆H₅), 1-Methylbenzyl (-CH₂-CH(CH₃)-C₆H₅), Benzyl (-CH₂-C₆H₅), Acetyl (-CO-CH₃), Propanoyl (-CO-CH₂-CH₃), Benzoyl (-CO-C₆H₅), m-Chlorbenzoyl (-CO-C₆H₄Cl) und p-Chlorbenzoyl (-CO-C₆H₄Cl) ist, besonders bevorzugt sind Methyl (-CH₃), t.-Butyl (-C(CH₃)₃), 1,1-Dimethylbenzyl (-CH₂-C(CH₃)₂-C₆H₅), Acetyl (-CO-CH₃) und Benzoyl (-CO-C₆H₅).

2. Verfahren zur Herstellung eines Feststoffs nach Anspruch 1, **gekennzeichnet durch** wenigstens folgende Verfahrensschritte:
- Silanisieren des partikulären Feststoffs mit einem Organosilan, das je Molekül wenigstens eine nucleophil-substituierbare Abgangsgruppe enthält, oder Vorlegen eines in dieser Weise silanisierten Feststoffs,
- Umsetzen des Feststoffs während der Silanisierung in einer Eintopfreaktion oder Umsetzen des Silanisierungsprodukts (basenkatalysiert) mit einer Hydroperoxyverbindung.

3. Verfahren zur Herstellung eines Feststoffs nach Anspruch 1 , **gekennzeichnet durch** wenigstens folgende Verfahrensschritte:
- Silanisieren des partikulären Feststoffs mit einem Organosilan, das zur Kondensation mit einem zwei- oder mehrfach funktionellen Säurechlorid befähigt ist, insbesondere einem Aminoalkylsilan, Carboxyalkylsilan oder Hydroxyalkylsilan, oder Vorlegen eines in dieser Weise silanisierten Füllstoffs;
- Umsetzen des Silanisierungsprodukts mit dem Säurechlorid unter Bildung eines Amids, Anhydrids oder Esters;
- Umsetzen des daraus erhaltenen Produkts mit einer Hydroperoxyverbindung.

4. Verfahren zur Herstellung eines Feststoffs nach Anspruch 1, **gekennzeichnet durch** wenigstens folgende Verfahrensschritte:
- Silanisieren des partikulären Feststoffs mit einem Acryloxy-, Methacryloxy- oder Epoxysilan oder Vorlegen eines in dieser Weise silanisierten Füllstoffs;
- Umsetzen des Feststoffs während der Silanisierung in einer Eintopfreaktion oder Umsetzen des Silanisierungsprodukts (basenkatalysiert) mit einer Hydroperoxyverbindung.

5. Verfahren nach Anspruch 2 oder 3, **dadurch gekennzeichnet, dass** die Substitution mit Hydroperoxyverbindungen am Silan als Phasentransferkatalyse durchgeführt wird.

6. Verfahren nach einem der Ansprüche 2 bis 5, **dadurch gekennzeichnet, dass** die Hydroperoxyverbindung ein Alkylhydroperoxid, ein aromatisches Hydroperoxid oder eine Alkyl- oder Arylperoxycarbonsäure ist.

7. Verfahren nach einem der Ansprüche 2 bis 6, **dadurch gekennzeichnet, dass z**ugleich mit der Umsetzung der Hydroperoxyverbindung oder anschließend mit wenigstens einem weiteren Nucleophil, vorzugsweise ausgewählt aus der Gruppe der Alkohole, Amine, Thiole oder Carbonsäuren, umgesetzt wird.

8. Verwendung des partikulären Feststoffs nach Anspruch 1 als Füllstoff für Polymermischungen, insbesondere radikalisch vernetzbare Elastomermischungen, auch in Kombination mit weiteren Füllstoffen und sonstigen Zusatzstoffen.

9. Heißvernetzbare Polymermischungen, insbesondere Kautschukmischungen, die einen partikulären Feststoff nach Anspruch 1 enthalten.

10. Technische Polymer- oder Elastomerartikel, insbesondere Reifen, Reifenteile, Riemen, Riementeile, Luftfedern, Förderbänder, Schläuche, Dichtungen, die einen in das Polymer oder Elastomer eingebunden partikulären Feststoff nach Anspruch 1 enthalten.

## Claims

1. Particulate solid made of silica, **characterized in that** it has peroxyorganosiloxane groups and the peroxyorganosiloxane groups have the following structure II:
-Si-Rₛₚ-O-O-R₂, (II)
where Rₛₚ is a linear or branched spacer group of aliphatic, arylic, or mixed aliphatic/arylic structure, and R₂ is a branched or unbranched, saturated or unsaturated, substituted or unsubstituted, aliphatic, aromatic, or mixed aliphatic/aromatic monovalent hydrocarbon group, preferably methyl (-CH₃), ethyl (-CH₂-CH₃), n-propyl (-(CH₂)₂-CH₃), isopropyl (-CH(CH₃)-CH₃), n-butyl (-(CH₂)₃-CH₃), isobutyl (-CH₂-CH(CH₃)-CH₃), tert-butyl (-C(CH₃)₃), 1,1-dimethylbenzyl (-CH₂-C(CH₃)₂-C₆H₅), 1-methylbenzyl (-CH₂-CH(CH₃)-C₆H₅), benzyl (-CH₂-C₆H₅), acetyl (-CO-CH₃), propanoyl (-CO-CH₂-CH₃), benzoyl (-CO-C₆H₅), m-chlorobenzoyl (-CO-C₆H₄Cl), and p-chlorobenzoyl (-CO-C₆H₄Cl), particular preference being given to methyl (-CH₃), tert-butyl (-C(CH₃)₃), 1,1-dimethylbenzyl (-CH₂-C(CH₃)₂-C₆H₅), acetyl (-CO-CH₃), and Benzoyl (-CO-C₆H₅).

2. Process for the production of a solid according to Claim 1, **characterized by** at least the following steps:
- silanization of the particulate solid with an organosilane which comprises at least one nucleophilically substitutable leaving group per molecule, or provision of a solid silanized in this manner,
- reaction of the solid during the silanization in a one-pot reaction or reaction of the silanization product (base-catalyzed) with a hydroperoxy compound.

3. Process for the production of a solid according to Claim 1, **characterized by** at least the following steps:
- silanization of the particulate solid with an organosilane which is capable of condensation with a di- or polyfunctional acyl chloride, in particular an aminoalkylsilane, carboxyalkylsilane, or hydroxyalkylsilane, or provision of a filler silanized in this manner;
- reaction of the silanization product with the acyl chloride with formation of an amide, anhydride, or ester;
- reaction of the resultant product with a hydroperoxy compound.

4. Process for the production of a solid according to Claim 1, **characterized by** at least the following steps:
- silanization of the particulate solid with an acryloxy, methacryloxy or epoxysilane, or provision of a filler silanized in this manner;
- reaction of the solid during the silanization in a one-pot reaction or reaction of the silanization product (base-catalyzed) with a hydroperoxy compound.

5. Process according to Claim 2 or 3, **characterized in that** the substitution by hydroperoxy compounds on the silane uses phase-transfer catalysis.

6. Process according to any of Claims 2 to 5, **characterized in that** the hydroperoxy compound is an alkyl hydroperoxide, an aromatic hydroperoxide, or an alkyl or aryl peroxycarboxylic acid.

7. Process according to any of Claims 2 to 6, **characterized in that** simultaneously with the reaction of the hydroperoxy compound or subsequently a reaction is carried out with at least one other nucleophile, preferably selected from the group of the alcohols, amines, thiols, or carboxylic acids.

8. Use of the particulate solid according to Claim 1 as filler for polymer mixtures, in particular elastomer mixtures amenable to free-radical crosslinking, also in combination with other fillers and other additional substances.

9. Heat-crosslinkable polymer mixtures, in particular rubber mixtures, which comprise a particulate solid according to Claim 1.

10. Technical items composed of polymer or of elastomer, in particular tires, tire components, drive belts, drive belt components, air springs, conveyor belts, hoses, or gaskets, comprising, bonded into the polymer or elastomer, a particulate solid according to Claim 1.

## Revendications

1. Solide particulaire de silice, **caractérisé en ce qu'**il comprend des groupes peroxy-organosiloxane, et les groupes peroxy-organosiloxane présentent la structure II suivante : 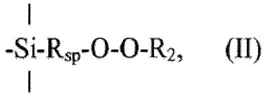
dans laquelle Rₛₚ est un groupe espaceur linéaire ou ramifié de structure aliphatique, arylique ou aliphatique/arylique mixte,
et R₂ est un groupe hydrocarboné monovalent ramifié ou non ramifié, saturé ou insaturé, substitué ou non substitué, aliphatique, aromatique ou aliphatique/aromatique mixte, de préférence méthyle (-CH₃), éthyle (-CH₂-CH₃), n-propyle (-(CH₂)₂-CH₃), isopropyle (-CH(CH₃)-CH₃), n-butyle (-(CH₂)₃-CH₃), isobutyle (-CH₂-CH(CH₃)-CH₃), t.-butyle (-C(CH₃)₃), 1,1-diméthylbenzyle (-CH₂-C(CH₃)₂-C₆H₅), 1-méthylbenzyle (-CH₂-CH (CH₃)-C₆H₅), benzyle (-CH₂-C₆H₅), acétyle (-CO-CH₃), propanoyle (-CO-CH₂-CH₃), benzoyle (-CO-C₆H₅), m-chlorobenzoyle (-CO-C₆H₄Cl) et p-chlorobenzoyle (-CO-C₆H₄Cl), de manière particulièrement préférée méthyle (-CH₃), t.-butyle (-C(CH₃)₃), 1,1-diméthylbenzyle (-CH₂-C(CH₃)₂-C₆H₅), acétyle (-CO-CH₃) et benzoyle (-CO-C₆H₅).

2. Procédé de fabrication d'un solide selon la revendication 1, **caractérisé par** au moins les étapes de procédé suivantes :
- la silanisation du solide particulaire avec un organosilane, qui contient au moins un groupe partant pouvant être substitué par un nucléophile par molécule, ou le chargement initial d'un solide ainsi silanisé,
- la mise en réaction du solide pendant la silanisation dans une réaction monotope ou la mise en réaction du produit de silanisation (sous catalyse basique) avec un composé hydroperoxy.

3. Procédé de fabrication d'un solide selon la revendication 1, **caractérisé par** au moins les étapes de procédé suivantes :
- la silanisation du solide particulaire avec un organosilane, qui est apte à la condensation avec un chlorure d'acide bi- ou polyfonctionnel, notamment un aminoalkylsilane, un carboxyalkylsilane ou un hydroxyalkylsilane, ou le chargement initial d'une charge ainsi silanisée,
- la mise en réaction du produit de silanisation avec le chlorure d'acide pour former un amide, un anhydride ou un ester,
- la mise en réaction du produit ainsi obtenu avec un composé hydroperoxy.

4. Procédé de fabrication d'un solide selon la revendication 1, **caractérisé par** au moins les étapes de procédé suivantes :
- la silanisation du solide particulaire avec un acryloxy-, méthacryloxy- ou époxysilane, ou le chargement initial d'une charge ainsi silanisée,
- la mise en réaction du solide pendant la silanisation dans une réaction monotope ou la mise en réaction du produit de silanisation (sous catalyse basique) avec un composé hydroperoxy.

5. Procédé selon la revendication 2 ou 3, **caractérisé en ce que** la substitution avec des composés hydroperoxy sur le silane est réalisée sous la forme d'une catalyse de transfert de phase.

6. Procédé selon l'une quelconque des revendications 2 à 5, **caractérisé en ce que** le composé hydroperoxy est un alkylhydroperoxyde, un hydroperoxyde aromatique ou un acide alkyl- ou arylperoxycarboxylique.

7. Procédé selon l'une quelconque des revendications 2 à 6, **caractérisé en ce que** simultanément à la réaction du composé hydroperoxy ou après, une réaction avec au moins un autre nucléophile, de préférence choisi dans le groupe des alcools, des amines, des thiols ou des acides carboxyliques, est réalisée.

8. Utilisation du solide particulaire selon la revendication 1 en tant que charge pour des mélanges de polymères, notamment des mélanges d'élastomères réticulables par voie radicalaire, également en combinaison avec d'autres charges et d'autres additifs.

9. Mélanges de polymères réticulables thermiquement, notamment mélanges de caoutchouc, qui contiennent un solide particulaire selon la revendication 1.

10. Article polymère ou élastomère technique, notamment pneus, parties de pneus, courroies, parties de courroies, ressorts pneumatiques, bandes de transport, tuyaux, joints, qui contiennent un solide particulaire selon la revendication 1 lié dans le polymère ou l'élastomère.
